# EUROPÄISCHE PATENTSCHRIFT

(11) **EP 1 227 122 B1**
(45) Veröffentlichungstag und Bekanntmachung des Hinweises auf die Patenterteilung: **27.09.2006**
(21) Anmeldenummer: 02001115.1
(22) Anmeldetag: 24.01.2002
(51) Int. Cl.: C08K 5/00

(54) **Metallchelatkomplexe als UV-Schutzmittel für Polymermaterialien**
Metal chelate complexes as UV protective agent in polymeric materials
Complexes chélatés métalliques utilisés comme agents de protection contre les rayons UV dans les matériaux polymériques

(30) Priorität: 25.01.2001 DE 10103349
(43) Veröffentlichungstag der Anmeldung: 31.07.2002
(73) Patentinhaber: Fraunhofer-Gesellschaft zur Förderung der angewandten Forschung e.V., 80686 München (DE)
(72) Erfinder: Rose, Klaus, Dr., 97318 Kitzinggen (DE); Schneider, Andreas, Anaheim, CA 92806 (US)

(56) Entgegenhaltungen:
- GB-A- 1 496 506
- US-A- 3 425 844
- US-A- 5 439 954
- US-A- 5 462 963
- US-A- 6 132 750

## Beschreibung

Die vorliegende Erfindung betrifft die Verwendung von Metallchelatkomplexen als UV-Schutzmittel für Polymermaterialien. Insbesondere betrifft die Erfindung solche Metallchelatkomplexe, die koordinativ und/oder kovalent mit dem Netzwerk des Polymermaterials verbunden werden.

### Hintergrund der Erfindung

Schutzbeschichtungen werden in zunehmendem Maß besonders auch in der Außenanwendung eingesetzt. Als Beispiele seien der Korrosions- und Kratzfestschutz von Metallen (Edelstahl, Messing, Aluminium), die Imprägnierung von Holz oder die Kratzfestbeschichtung von Kunststoffen genannt. Die relevanten Industriezweige sind insbesondere in der Automobilbranche oder im Bausektor zu finden.

Neben der Erfüllung der primären, oben angeführten Anforderungen (Korrosions- und Kratzfestschutz), soll vor allem die Langlebigkeit der Schicht unter Umwelteinflüssen, vor allem Feuchtigkeit und Sonneneinstrahlung (UV-Licht) gegeben sein. Die letztgenannten Einflüsse führen häufig zur Degradation des Beschichtungswerkstoffes, was sich in Verfärbung, Rißbildung, und Schichtablösung äußert. Als Folge davon wird dann das beschichtete Substrat angegriffen. Aber auch die Substratmaterialien selbst sind diesen Einflüssen unterworfen und werden entsprechend geschädigt, vor allem Kunststoffe.

Gängige Polymermaterialien werden bezüglich ihrer UV-Stabilität in drei Gruppen eingeteilt:
(a) hochstabile Materialien, die weitgehend ohne stabilisierende Zusätze eingesetzt werden, wie z.B. PTFE oder PMMA,
(b) mäßig stabile Materialien, die ohne Zusätze für einige Zeit inert sind, wie z.B. PET oder PC,
(c) wenig stabile Materialien, die nur mit Stabilisatoren im Außenbereich einsetzbar sind, wie z.B. Polyolefine, PVC, PS, PA oder PU.

Die UV-induzierte Degradation von polymeren (Schicht-)Materialien wurde ausgiebig untersucht (L. J. Callo (Ed.), Handbook of Coating Additives, Marcel Dekker, Inc., New York, 1987; Photostabilization of Polymers, Elsevier Science Publishers, 1990). Sie verläuft über die Bildung freier Radikale, die durch Absorption von UV-Strahlung über entsprechende Chromophore und dadurch angeregte Elektronenzustände initiiert wird. Diese Radikale greifen das organische Netzwerk an, führen zum Aufbrechen von Bindungen und somit zur Alterung des Materials.

Die Materialdegradation zeigt sich in vielfältigen sichtbaren Veränderungen der Schicht, z.B. Verlust des Glanzes, Trübung, Vergilbung, Kreidung, zunehmende Sprödigkeit, Rißbildung, Schichtablösung. Diese Abbauerscheinungen werden nur durch spezielle Stabilisatoren unterdrückt, die praktisch allen heute im Außenbereich verwendeten polymeren Materialien zugesetzt werden (E. Kramer, Kunststoffe, Bd. 86, S. 948, 1996). Dies gilt auch für das weniger lichtempfindliche PMMA oder PC.

In zunehmendem Maß werden auch UV-härtbare Schichtsysteme eingesetzt, die kürzere Härtungszeiten und höhere Taktraten in der Produktion erlauben. Dies führt wiederum zu dem Problem, daß die zur Härtung verwendete, sehr intensive und energiereiche UV-Strahlung schon bei der Schichthärtung sowohl die Schicht als auch das Substrat schädigen kann.

UV-Licht kann nur dann seine schädigende Wirkung entfalten, wenn es von den in Frage kommenden Materialien absorbiert wird. Da nahezu alle organischen Verbindungen und Polymere im UV-Bereich absorbieren, besteht immer die Möglichkeit der UV-induzierten Degradation.

Obwohl ultraviolette Strahlung (290 bis 400 nm) nur ca. 6% der Energie der erdnahen Strahlung beinhaltet, ist sie in der Außenbewitterung hauptverantwortlich für die Zersetzung von Kunststoffen oder organischen (Schicht-)Materialien innerhalb weniger Jahre oder gar von Monaten. Es hat deshalb nicht an Versuchen gefehlt, Beschichtungssysteme durch entsprechende Zusätze gegen UV-Bestrahlung zu stabilisieren. Dies geschieht v.a. durch Additive, die die energiereiche Strahlung absorbieren und in Wärme umwandeln (z.B. UV-Absorber vom Benzotriazoltyp) oder die die durch die UV-Strahlung gebildeten Radikale, die den Abbaumechanismus initiieren, abfangen (z.B. hindered amine light stabilizers, HALS).

### Stand der Technik

Zum Schutz von Polymermaterialien gegen UV-induzierte Degradation werden üblicherweise UV-Absorber aus der Klasse der Benzophenone (folgende Formel (A)) oder der Benzotriazole (folgende Formel (B)) eingesetzt, die eine hohe Eigenabsorption im UV-Bereich aufweisen und für sich sehr stabil sind.

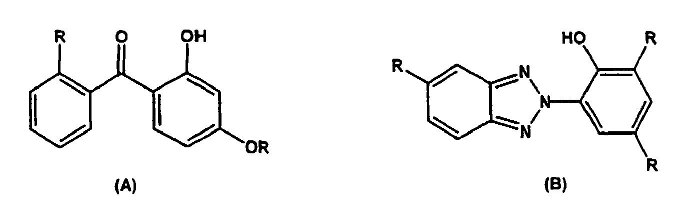

(In den obigen Formeln steht R jeweils für Wasserstoff oder einen organischen Rest.)

Die eintreffende UV-Strahlung wird absorbiert und durch intramolekulare Umlagerung in Wärmeenergie überführt. Speziell bei Polyolefinen haben sich HALS-Verbindungen bewährt, die vor allem als Radikalfänger fungieren.

Dem Anwender steht gegenwärtig eine Palette von ca. 200 Handelsprodukten zur Verfügung, wobei zumeist mehrere Hersteller jeweils identische Produkte unter einem anderen Handelsnamen anbieten. Gängige Handelsnamen sind z.B.: Tinuvin^{™} (Ciba Geigy), Uvinul^{™} (BASF), Sanduvor^{™} (Sandoz). Dabei werden für unterschiedliche Basismaterialien unterschiedliche, jeweils am besten geeigneten Stabilisatoren bereitgestellt. Weiterhin wurden spezielle Kombinationsmöglichkeiten unterschiedlicher Stabilisatortypen gefunden, die durch synergetische Effekte die bestmögliche Wirkung erzielen (Fa. Ciba Geigy, Produktinformationsblätter über Tinuvine^{™}).

Dennoch besitzen die bekannten UV-Stabilisatoren für Polymermaterialien einige gravierende Nachteile; dazu gehören:
(a) Es handelt sich um große organische Moleküle, die oftmals in der benötigten Menge sowohl im Beschichtungssystem als auch im Polymerwerkstoff schwer löslich sind, insbesondere bei Verarbeitung in wäßrig-alkoholischen Systemen.
(b) Der Einsatz der Verbindungen hat im Falle von Beschichtungen oft negative Auswirkungen auf die Haftfestigkeit zum Substrat und auf die mechanischen Eigenschaften wie Kratz- und Abriebfestigkeit.
(c) Die vom Hersteller empfohlene Menge liegt im Bereich von 1 bis 3% bzgl. des Feststoffgehalts. Eine größere Menge ist oft sehr schwer löslich und einzuarbeiten, und sie führt aufgrund von Eigenabsorption zur Verfärbung.

Das US-Patent 3,425,844 beschreibt die Stabilisierung bestimmter UV-empfindlicher Polymerharze, einschließlich Alkyd-, Vinyl-, Urethan- und Phenolharze, durch Einmischen bestimmter Formazanderivate und Metallchelaten von Bicyclononandionestern, wobei jedoch keine kovalente Verbindung der Metallkomplexe mit dem Netzwerk der Polymermaterialien erfolgt.

### Beschreibung der Erfindung

Der vorliegenden Erfindung liegt die Aufgabe zugrunde, die genannten Nachteile bekannter UV-Stabilisatoren zu überwinden und insbesondere möglichst viele der folgenden Anforderungen zu erfüllen:
(a) Es soll starke UV-Absorption erzielt werden.
(b) Das UV-Schutzmittel soll auch in hoher Konzentration verwendbar sein.
(c) Die mechanischen Eigenschaften (insbesondere Kratzfestigkeit und Haftung auf Substraten) sollen durch das UV-Schutzmittel nicht oder nur unwesentlich beeinträchtigt werden.
(d) Das UV-Schutzmittel soll auch ohne gesonderten Radikalfänger wirksam sein und insbesondere als Ein-Komponenten-System wirken.
(e) Die Wirksamkeit des UV-Schutzmittels soll über einen langen Zeitraum erhalten bleiben.
(f) Das UV-Schutzmittel soll auch bei kurzen Wellenlängen möglichst stark absorbieren.
(g) Außer dem Polymermaterial selbst soll ggf. auch ein damit beschichtetes Substrat gegen UV-induzierte Degradation geschützt werden.

Die genannte Aufgabe wird erfindungsgemäß gelöst, indem Metallchelatkomplexe der folgenden Formel (I) als UV-Schutzmittel für Polymermaterialien verwendet werden:

XₘMLₙ (I)

worin
X für eine C₁- bis C₆-Alkoxygruppe, eine C₆- bis C₁₂-Aryloxygruppe oder für Halogenid steht und wobei, falls m größer als eins ist, die einzelnen X verschieden voneinander sein können;
m für eine ganze Zahl von 0 bis 3 steht;
M für ein Metallion steht;
L für einen Chelatliganden steht, der das Metallion M koordiniert, wobei, falls n größer als eins ist, die einzelnen L verschieden voneinander sein können;
n für eine ganze Zahl von 1 bis 3 steht;
und wobei
(a) mindestens eine Gruppe X als Ligand des Metallions M fungiert und hydrolysierbar ist oder mindestens ein Ligand L hydrolysierbar ist, so daß der Komplex zur koordinativen Einbindung in das Netzwerk des Polymermaterials durch Co-Kondensationsreaktionen befähigt ist, und wobei der Komplex auf diese Weise in das Netzwerk eingebunden wird,
   und/oder
(b) mindestens ein Ligand L des Metallions M eine funktionelle Gruppe umfaßt, die die kovalente Verbindung des Komplexes mit dem Netzwerk des Polymermaterials durch Co-Polymerisation ermöglicht, und wobei der Komplex auf diese Weise mit dem Netzwerk verbunden wird.

Die Wahl des Metallions M der erfindungsgemäß verwendbaren Metallchelatkomplexe ist nicht besonders beschränkt. Bevorzugt sind Metallionen, die zur Bildung hinreichend stabiler Chelatkomplexe fähig sind. Bevorzugt sind insbesondere die Ionen von Be, Ca, Ba, Al, Ga, Ge, Sn, Pb, Bi, Ti, Zr, Co, Cu, Cd, Ce und La. Besonders bevorzugt sind die Ionen von Al, Zr und Ti.

Bevorzugt steht X für OMe, OEt, OⁿPr, OⁱPr, OⁿBu, O^{s}Bu, OⁱBu, O^{t-}Bu, OPh, Cl oder Br.

Im allgemeinen fungiert X als Ligand des Metallions M; grundsätzlich kann X aber auch ein nicht-koordinierendes Gegenion sein.

Die Wahl der Chelatliganden L der erfindungsgemäß verwendbaren Metallchelatkomplexe ist nicht besonders beschränkt. Die Liganden L können funktionelle Gruppen umfassen, über die der Komplex an der Polymerisation des zu stabilisierenden Polymermaterials als Co-Monomer teilnehmen kann. Diese funktionellen Gruppen können insbesondere Vinyl-, Allyl-, Acryl- oder Methacryl-Gruppen (allgemein: Doppelbindungen) oder auch Epoxid-Gruppen sein. Als funktionelle Gruppen, über die der Chelatligand L an der Polymerisation bzw. Venetzung eines zu stabilisierenden Polymermaterials teilnehmen kann, kommen aber auch Isocyanat-, Amino- oder OH-Gruppen in Frage. (Als "Polymerisation" sind hier auch Polykondensationsreaktionen zu verstehen.)

Als Chelatliganden L sind insbesondere die konjugierten Basen von Verbindungen einer der folgenden Formeln (II-a), (II-b) oder (II-c) bevorzugt; 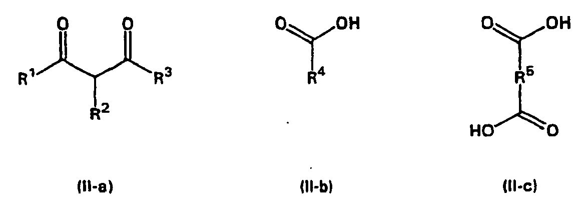 worin
R¹, R² und R³, unabhängig voneinander für H, CH₃, ^{t}Bu, CF₃, CF₂CF₂CF₃, OCH₃, OCH₂CH₃, Thien-2-yl, CH=CH₂, CH₂CH=CH₂, O[CH₂]ᵢOC(O)CH=CH₂ oder O[CH₂]ᵢCH=CH[CH₂]ₖCH₃ stehen, wobei i und k jeweils unabhängig voneinander für eine ganze Zahl von 1 bis 8 stehen;
R⁴ für eine C₁- bis C₆-Alkylgruppe, eine Vinyl- oder 1-Methylvinylgruppe steht;
R⁵ für eine kovalente Bindung, eine C₁- bis C₈-Alkylengruppe oder eine Phenylengruppe steht.

Besonders bevorzugte Chelatliganden L sind die konjugierten Basen von Acetylaceton, Ethylacetoacetat, Acrylsäure, Methacrylsäure und 3-Hydroxy-2-methyl-4-pyron.

Die Bezeichnung "hydrolysierbar" bedeutet in diesem Zusammenhang, daß ein Ligand (X oder L) unter wäßrigen oder wäßrig-alkoholischen Bedingungen, und insbesondere unter den Bedingungen der Herstellung des zu stabilisierenden Polymermaterials, gegen Wasser austauschbar ist, wobei eine metallgebundene OH-Gruppe gebildet wird. Der direkte Austausch gegen einen anderen Liganden, insbesondere eine polymergebundene Alkoxy- oder Siloxygruppe kommt grundsätzlich auch im Betracht. Die erfindungsgemäß verwendbaren Chelatliganden sind insofern hydrolysierbar, als von mehreren solchen Liganden zumindest einer unter den genannten Bedingungen austauschbar ist.

Bevorzugte, erfindungsgemäß verwendbare Metallchelatkomplexe sind:
Aluminium-tris-ehtylacetoacetat, Aluminium-di-sec-butoxid-ethylacetoacetat, Titan-dipropoxid-dimethacrylat und Zirkonium-dipropoxid-dimethacrylat.

Die Polymermaterialien, die durch die erfindungsgemäße Verwendung von Metallchelatkomplexen stabilisiert werden können, sind nicht besonders beschränkt, sofern sie die koordinative und/oder kovalente Einbindung der Komplexe in das Polymernetzwerk durch Co-Polymerisation bzw. Co-Kondensation ermöglichen. D.h., daß das Polymermaterial mindestens ein (Co-)Monomer umfassen muß, das mit einer funktionellen Gruppe eines der Liganden L des Metallchelatkomplexes co-polymerisierbar ist und/oder funktionelle Gruppen umfassen muß, die als Liganden für das Metallion M fungieren können. Bei den Polymermaterialien kann es sich um rein organische und rein anorganische Polymere handeln.

Die genannten Voraussetzungen erfüllen insbesondere auch anorganisch-organische Hybridpolymere, und speziell solche die als OR-MOCER^{™} bezeichnet werden. Die Herstellung dieser Polymermaterialien erfolgt über den Sol-Gel-Prozeß aus monomeren Verbindungen mit hydrolysierbaren Gruppen (z.B. Alkoxidgruppen oder auch Halogeniden). Durch Hydrolyse und Kondensation wird dabei unter Alkohol- und Wasserabspaltung ein anorganisches Netzwerk gebildet. Außerdem wird durch ebenfalls in den monomeren Ausgangsverbindungen enthaltene reaktive, polymerisierbare oder funktionelle organische Gruppen eine zusätzliche organische Quervernetzung ausgebildet. Solche Hybridpolymere bzw. deren Herstellung sind z.B. beschrieben in: K.-H. Haas, S. Amberg-Schwab, K. Rose, Jahrbuch Oberflächentechnik (Hrsg.: A. Zielonka; Hüthig Verlag, Heidelberg), Band 55 (1999), S. 183-198; sowie in den folgenden Patentdokumenten: DE 43 03 570 C2, DE 40 11 045 C2 und EP 0 451 709 B1.

Bei der erfindungsgemäßen Verwendung von Metallchelatkomplexes werden diese Komplexe koordinativ und/oder kovalent in das Polymernetzwerk eingebunden.

"Koordinative Einbindung" bedeutet in diesem Zusammenhang, daß der Komplex dadurch mit dem Netzwerk des Polymers verbunden ist, daß das Metallion des verwendeten Komplexes mindestens einen hydrolysierbaren Liganden X oder L besitzt, der im Endprodukt durch eine Donorgruppe (z.B. eine Alkoxygruppe) des Netzwerks als Ligand ersetzt wird, wobei im allgemeinen X (bzw. L) zunächst gegen Wasser bzw. OH ausgetauscht wird. Diese Ersetzung kann insbesondere während der Bildung des Netzwerks durch Co-Kondensation (d.h. bei gleichzeitiger Hydrolyse mit einer Netzwerkkomponente, z.B. einem funktionellen Alkoxysilan) erfolgen, wie im folgenden Schema angedeutet.

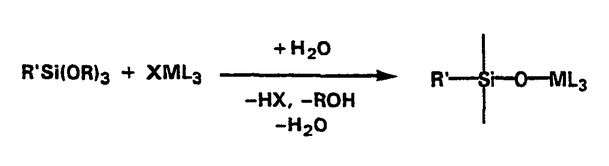

Der koordinative Einbau kann aber auch nach Ausbildung des OHgruppenhaltigen Polymers erfolgen; letzteres Prinzip wird durch das folgende Schema veranschaulicht, bei dem die Wellenlinie das Polymernetzwerk darstellt.

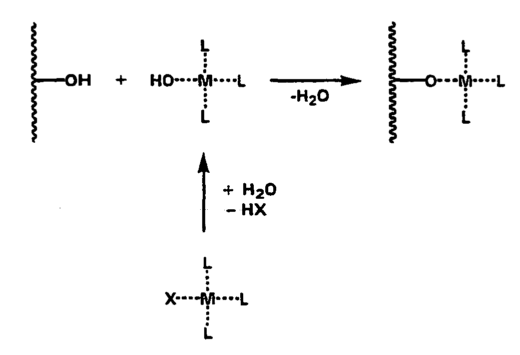

Durch Co-Kondensation mit weiteren hydrolysierbaren Monomeren ist eine zusätzliche Einbindungsmöglichkeit in das anorganische Netzwerk von anorganisch-organischen Hybridpolymeren (ORMOCERE^{™}) gegeben.

"Kovalente Einbindung" bedeutet in diesem Zusammenhang, daß der Komplex dadurch mit dem Netzwerk des Polymermaterials verbunden ist, daß mindestens einer der Liganden (L) des Metallions eine funktionelle Gruppe (z.B. eine Doppelbindung) besitzt, die mit den funktionellen Gruppen des Monomers des Polymermaterials reagieren kann, und bei der Bildung des Polymernetzwerks an der Polymerisationsreaktion als Co-Monomer teilnimmt. Dieses Prinzip wird durch das folgende Schema veranschaulicht, bei dem die Kreise Monomereinheiten bzw. deren reagierende funktionelle Gruppe darstellen.

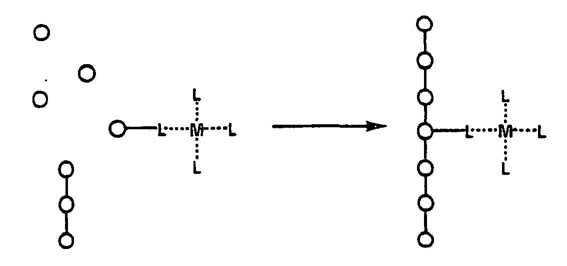

Durch Co-Polymerisation mit weiteren Monomeren ist eine zusätzliche Einbindungsmöglichkeit in das organische Netzwerk von anorganisch-organischen Hybridpolymeren (ORMOCERE^{™}) oder von organischen Polymeren gegeben.

Beide Arten der Einbindung (koordinativ und kovalent) können gleichzeitig vorliegen.

Die Einarbeitung des Metallchelatkomplexes in das zu-stabilisierende Polymermaterial erfolgt, indem der Komplex und das Polymermaterial bzw. die monomeren Ausgangskomponenten ggf. in Gegenwart eines Lösungsmittels vermischt und zur Reaktion gebracht werden. Sofern das zu stabilisierende Polymermaterial im Sol-Gel-Verfahren hergestellt wird, kann die Einarbeitung des Metallchelatkomplexes in einfacher Weise dadurch erfolgen, daß die monomeren Komponenten gemischt und mit Wasser zur Reaktion gebracht werden. Die Metallchelatkomplexe werden dabei zugegeben und dadurch in der oben beschriebenen Weise in das Polymernetzwerk mit eingebaut. Das Reaktionsmedium ist somit flüssig und kann in diesem Zustand z.B. als Naßlack auf beliebige Substrate aufgebracht werden. Es kann dann durch organische Polymerisation gehärtet werden.

Die erfindungsgemäß verwendbaren Metallchelatkomplexe können, insbesondere wenn sie kovalent in das Polymermaterial eingebaut werden, auch als Additiv nach erfolgter Ausbildung des primär gebildeten anorganischen Polymernetzwerks in das Reaktionsgemisch eingebracht und zur Reaktion gebracht werden.

Das erfindungsgemäß stabilisierte Polymermaterial kann als Material zur Beschichtung beliebiger Substrate oder zur Herstellung von Folien und dreidimensionalen Formkörpern verwendet werden.

Die Menge der erfindungsgemäß verwendbaren Metallchelatkomplexe ist nicht besonders beschränkt. Typischerweise werden 0,01 bis 70 Gew.-% Metallchelatkomplex bezogen auf den Feststoffgehalt des Polymermaterials eingesetzt. Bevorzugt ist eine Menge von 5 bis 30 Gew.-%.

Bei Einbau der erfindungsgemäß verwendbaren Metallchelatkomplexe in das anorganische Netzwerk anorganisch-organischer Hybridpolymere über den Sol-Gel-Prozeß läßt sich die Menge des eingesetzten Metallchelatkomplexes auch als Stoffmengenverhältnis von Metallchelatkomplex zu Monomerkomponente ausdrücken, wobei dieses Verhältnis bevorzugt 5 bis 30 mol-% beträgt.

Die erfindungsgemäße UV-Stabilisierung von Polymermaterialien ist insbesondere mit folgenden Vorteilen verbunden:
(a) Die Komplexe besitzen bei gleicher Konzentration gleich gutes oder höheres UV-Absorptionsvermögen als herkömmliche organische UV-Absorber (vgl. Beispiel 1).
(b) Es handelt sich um kleine Moleküle bzw. Komplexe, die in vielen gängigen Lösemitteln, sowie in wäßrig-alkoholischen Systemen löslich sind.
(c) Durch die (koordinative und/oder kovalente) Einbindung in das Netzwerk des zu stabilisierenden Polymers ergibt sich insbesondere eine verbesserte Stabilität gegen Ausdiffundieren des UV-Absorbers und dadurch erhöhte Langzeitstabilität. Außerdem kann die erfindungsgemäße Verwendung von Metallchelatkomplexen eine Erhöhung des Molekulargewichts der Polymermaterialien bewirken.
(d) Aufgrund der Löslichkeit und direkten Einbindung in das Netzwerk des Polymermaterials sind deutlich größere Gehalte erzielbar als mit rein organischen UV-Absorbern (bis zu 70%). Daraus resultiert eine deutlich verbesserte Schutzwirkung als mit rein organischen UV-Absorbern.
(e) Es tritt keine Verschlechterung der Haftung zum Substrat und keine Verschlechterung oder (durch Erhöhung der Vernetzungsdichte) sogar eine Verbesserung der mechanischen Eigenschaften auf, z.B. in Taber-Abraser-Test oder in Bezug auf die Schichthärte (vgl. Beispiel 4). (Herkömmliche UV-Schutzmittel stören das Netzwerk und wirken als Weichmacher.)
(f) Trotz erhöhter UV-Absorption treten keine Einschränkungen bei der UV-Härtung von Schichten auf.
(g) Auch hohe Gehalte an erfindungsgemäß verwendeten Metallchelatkomplexen führen nicht zur Verfärbung.
(h) Die erfindungsgemäß verwendeten Metallchelatkomplexe können mit kommerziellen UV-Absorbern oder Radikalfängern kombiniert werden.

### Kurze Erläuterung der Zeichnungen

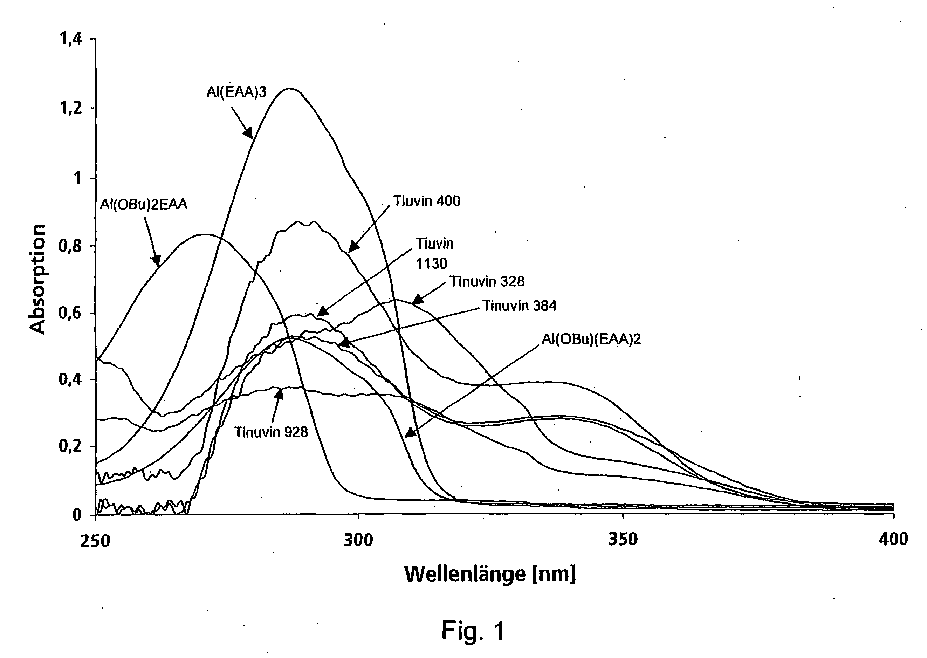

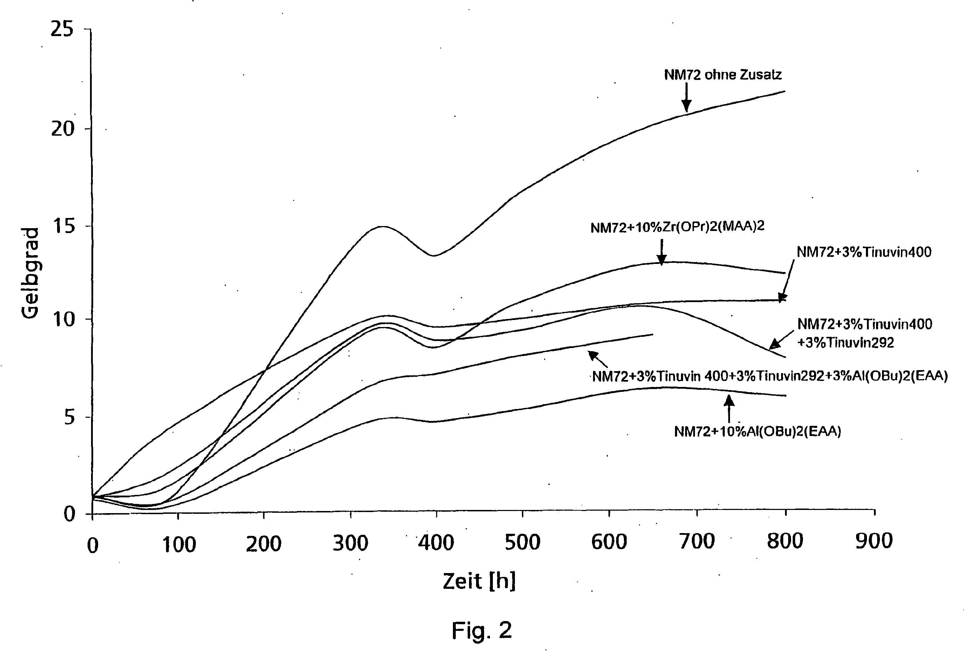

Fig. 1 zeigt die UV-Absorptionsspektren verschiedener UV-Absorber, einschließlich erfindungsgemäß verwendbarer Aluminiumkomplexe, die wie in Beispiel 1 näher erläutert gemessen wurden. Fig. 2 zeigt die Abhängigkeit des Gelbgrades von der Dauer der UV-Belichtung unter den in Beispiel 2 näher erläuterten Bedingungen.

### Beispiele

Die Erfindung wird durch die folgenden Beispiele näher erläutert. Dabei beziehen sich Angaben in %, soweit nichts anderes angegeben ist auf Gew.-%.

### Beispiel 1

Die UV-Absorptionsspektren der folgenden UV-Absorber wurden in 0,0004%-iger Lösung in Ethanol aufgenommen und sind in Fig. 1 gezeigt:
(a) Tinuvin^{™} 1130
(b) Tinuvin^{™} 384
(c) Tinuvin^{™} 400
(d) Tinuvin^{™} 328
(e) Tinuvin^{™} 928
(f) Aluminium-di-sec-butoxid-ehtylacetoacetat ([Al(O^{s}Bu)₂(EAA)])
(g) Aluminium-sec-butoxid-bis-ehtylacetoacetat ([Al(O^{s}Bu) (EAA)₂])
(h) Aluminium-tris-ethylacetoacetat ([Al(EAA)₃])

Die Spektren von (a) bis (e) wurden zu Vergleichszwecken aufgenommen, während (f) bis (h) erfindungsgemäß verwendbare Komplexe darstellen. Die chemischen Strukturen der obengenannten Verbindungen bzw. Komplexe werden durch die folgenden Formeln angegeben.

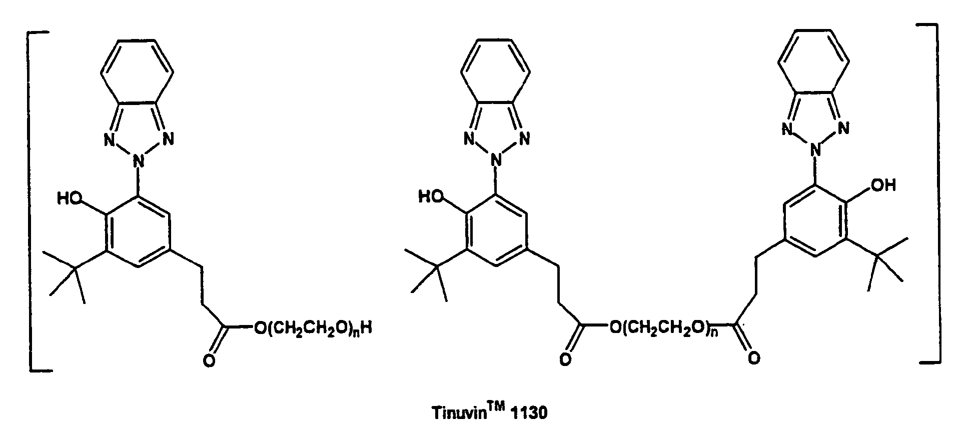

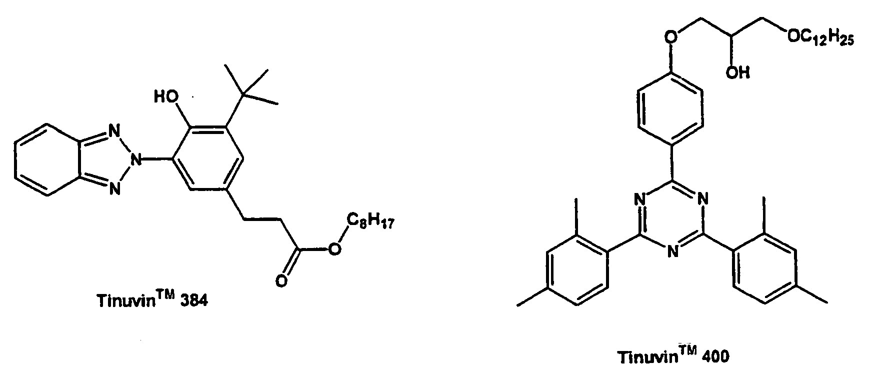

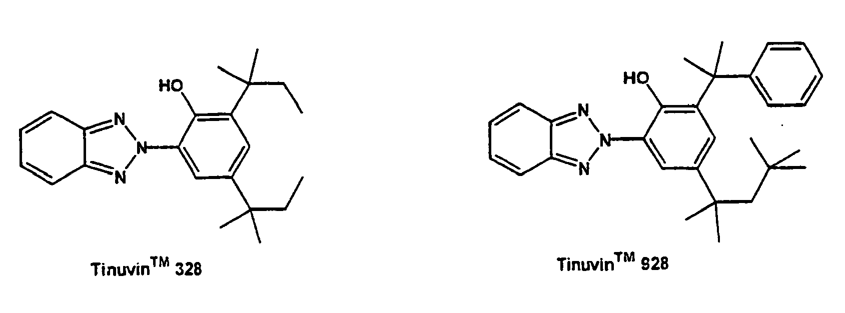

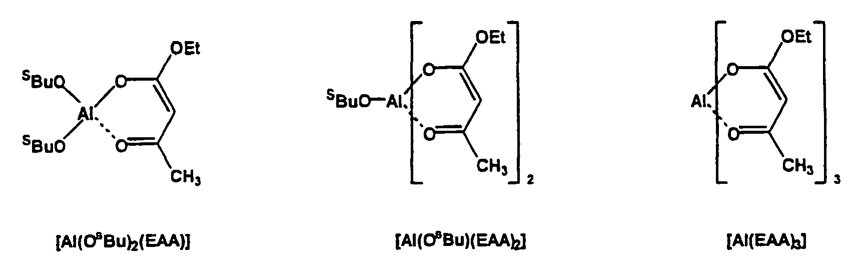

Die Spektren zeigen, daß die erfindungsgemäß verwendbaren Aluminium-Komplexe UV-Licht stärker absorbieren als bekannte organische UV-Absorber für Polymermaterialien.

### Beispiel 2

In diesem Beispiel wurden die Vergilbung eines anorganisch-organischen Hybrid-Lackes (ORMOCER^{™} NM72) auf einem inerten, UVunempfindlichen Substrat (Glas) unter permanenter UV-Belichtung (SUN-Test) und der Einfluß verschiedener UV-Absorber auf diese Vergilbung geprüft.

### Herstellung des anorganisch-organischen Hybrid- (ORMO-CER^{™}-)Lackes

Unter Kühlung auf 5 °C (Eisbad) und in einer Stickstoffatmosphäre werden zu einer Lösung von 0,1 mol (42,4 g) ethoxyliertem Bisphenol A Diacrylat der folgenden Formel 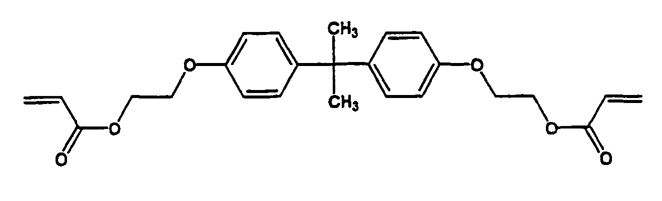 in 50 ml Ethylacetat 0,1 Mol (18 g) Mercaptopropylmethyldimethoxysilan (HS-(CH₂)₃-Si(Me)(OMe)₂) zugegeben, worauf die Mischung so langsam (Zutropfen) mit 0,001 Mol (0,056 g) KOH, gelöst in 5 g Ethanol, versetzt wird, daß die Temperatur der Reaktionsmischung deutlich unter 40 °C bleibt. Nach Beendigung der Zugabe wird noch einige Minuten bei 5 °C gerührt, bis der Iod-Mercaptantest die Abwesenheit von freiem Mercaptosilan anzeigt. Daraufhin werden unter Eiskühlung 0,1 Mol (1,8 g) Wasser in Form einer 1 n HCl-Lösung zugegeben, und danach wird noch weitere 2 Stunden bei 25 °C gerührt. Anschließend wird die Reaktionsmischung mit Ethylacetat (50 ml) verdünnt und dann solange mit 30 ml-Portionen Wasser gewaschen, bis das Waschwasser neutral reagiert. Die gewaschene organische Phase wird dann über Na₂SO₄ oder mit Hilfe eines hydrophoben Filters getrocknet, woraufhin aufgearbeitet wird, indem durch Einengen der Ethylacetatlösung am Rotationsverdampfer bei ca. 30 °C ein Feststoffgehalt von ca. 40% eingestellt wird.

Die Zusammensetzung der in diesem Beispiel hergestellten Lackschichten war wie folgt:
(a) ORMOCER^{™} NM 72 (ohne UV-Absorber)
(b) ORMOCER^{™} NM 72 + 3% Tinuvin^{™} 400
(c) ORMOCER^{™} NM 72 + 3% Tinuvin^{™} 400 + 3% Tinuvin^{™} 292
(d) ORMOCER^{™} NM 72 + 10% Zirkonium-dipropoxid-dimethacrylat ([Zr(OPr)₂(MMA)₂])
(e) ORMOCER^{™} NM 72 + 3% Tinuvin^{™} 400 + 3% Tinuvin^{™} 292 + 3% Aluminium-di-sec-butoxid-ethylacetoacetat ([Al(O^{s}Bu)₂EAA])
(f) ORMOCER^{™} NM 72 + 10% Aluminium-di-sec-butoxid-ethylacetoacetat ([Al(O^{s}Bu)₂EAA])

Die Einarbeitung des verwendeten Aluminiumkomplexes in den ORMO-CER^{™}-Lack erfolgt dabei, indem eine Stunde nach Zugabe der HCl-Lösung eine Lösung des Komplexes in einem Alkohol wie n-Butanol oder n-Propanol in das Reaktionsgemisch eingerührt wird, bevor noch eine weitere Stunde gerührt wird. Dabei erfolgt der Einbau des Komplexes in das anorganische Netzwerk durch Reaktion mit Wasser.

Der verwendete Zirkoniumkomplex wird kurz vor dem Beschichtungsvorgang in der Beschichtungslösung gelöst. Durch Polymerisationsreaktion der Methacrylatgruppen des Liganden am Zirkonium mit den Acrylatgruppen des in der Lösung befindlichen Acrylats wird der Komplex in das organische Netzwerk mit eingebaut.

Die Lackschichten der Zusammensetzungen (a) und (b) wurden zu Vergleichszwecken hergestellt und untersucht. Die Beschichtung erfolgte jeweils durch Tauchen oder Fluten. Die resultierenden Schichtdicken lagen im Bereich von 3 bis 5 um. Die Schichthärtung erfolgte mittels intensiver UV-Bestrahlung mit einem Quecksilberdampf-Mitteldruckstrahler im Wellenlängenbereich von 220 bis 580 nm (Breitbandstrahler) bei einer Strahlenleistung von 1200 Watt. Die Bestrahlung erfolgte für 20 Sekunden im Durchlaufverfahren bei 0,6 m/min.

### Prüfung der Vergilbung

Gemessen wurde der Gelbgrad gemäß DIN 6167 (Farbabweichung nach Gelb) nach Exposition im Xenontest (DIN 53231 oder DIN 53387) mit einem Spektralphotometer in Abhängigkeit von der Expositionsdauer. (Der Xenontest simuliert die UV-Belastung analog dem Tageslicht-Sonnenspektrum (D65-Filter, Wellenlänge ab ca. 300 nm), allerdings mit deutlich höherer Intensität (Strahlenleistung ca. 1000 Watt).) Die erhaltenen Gelbgrad-Zeit-Kurven sind in Fig. 2 gezeigt.

Der Zusatz unterschiedlicher UV-Absorber, teilweise in Kombination mit Radikalfängern, zeigt deutlich den schützenden Einfluß des Aluminiumkomplexes (Lackschicht (f): Gelbgrad = 5 nach 500 Stunden) im Vergleich zum unmodifizierten Lack (Lackschicht (a): Gelbgrad = 16 nach 500 Stunden). Der Effekt ist deutlich besser als bei Zusatz von Tinuvin™ 400 (Lackschicht (b): Gelbgrad = 9 nach 500 Stunden). Auch der Zusatz von Zirkonium-dipropoxid-dimethacrylat zeigt eine deutliche Schutzwirkung (Lackschicht (d): Gelbgrad = 11 nach 500 Stunden).

### Beispiel 3

Viele Kunststoffe vergilben unter dem Einfluß von UV-Licht. Werden Substrate aus solchen Kunststoffen z.B. mit UV-härtenden Schichten überzogen, kann die Vergilbung schon bei der Härtung der Überzugsschicht, d.h. sehr frühzeitig, einsetzen. Durch Einbau geeigneter UV-Absorber in die Überzugsschicht wird die Vergilbung des Kunststoffes nachhaltig reduziert bzw. verhindert. Die Wirkung verschiedener UV-Absorber bei dieser Anwendung wurde in diesem Beispiel geprüft.

Beschichtet wurden Kunststoffscheiben aus modifiziertem Polycarbonat. Dabei wurde zur Beschichtung ein anorganisch-organisches Hybridpolymer (ORMOCER^{™}), wie es in der Druckschrift DE 40 11 045 C2 beschrieben ist, verwendet, wobei die in der Tabelle 1 angegebenen Zusätze von Tinuvin^{™} 400 bzw. Aluminium-di-sec-butoxid-ethylacetoacetat ([Al(O^{s}Bu)₂EAA]) zugegeben wurden. Die Dicke der durch Tauchen aufgebrachten und wie in Beispiel 2 beschrieben (mittels Quecksilberdampf-Mitteldruckstrahler) ausgehärteten Lackschichten lag im Bereich von 3 bis 5 µm.

Die Ergebnisse sind in Tabelle 1 gezeigt. Den besten Effekt zeigt wiederum ein erfindungsgemäß verwendeter AluminiumKomplex.

**Tabelle 1.** Vergilbung bei UV-gehärteten ORMOCER^{™}-Schichten mit und ohne UV-Absorber auf Kunststoff. Der Gelbgrad wurde nach 20 Sekunden UV-Belichtung (Härtung) gemessen. (Die mit * gekennzeichneten Proben wurden zu Vergleichszwecken hergestellt und untersucht.)

| Probe | Gelbgrad |
|---|---|
| Kunststoff ohne Schicht* (nach gleicher Belichtung wie bei den anderen Proben) | 2,57 |
| Kunststoff + ORMOCER^{™}-Schicht ohne Zusatz* | 1,99 |
| Kunststoff + ORMOCER^{™}-Schicht mit 1% Tinuvin^{™} 400* | 1,73 |
| Kunststoff + ORMOCER^{™}-Schicht mit 2% Tinuvin^{™} 400* | 1,77 |
| Kunststoff + ORMOCER^{™}-Schicht mit 3% Tinuvin^{™} 400* | 1,93 |
| Kunststoff + ORMOCER^{™}-Schicht mit 10% [Al(O^{s}Bu)₂(EAA)] | 1,30 |

Der gleiche Effekt tritt auf, wenn der Kunststoff längere Zeit in der Freibewitterung dem Sonnenlicht ausgesetzt ist. Hier kann in gleicher Weise die Vergilbung, aber auch die allgemeine Degradation durch geeignete Absorber in der Schicht reduziert werden.

### Beispiel 4

Es wurden Beschichtungssysteme aus Vinyltriethoxysilan (250 mmol), Mercaptopropyltrimethoxysilan (250 mmol) und den in der Tabelle 2 angegebenen Mengen von Zirkonium-dipropoxid-dimethacrylat hergestellt und deren Schichthärte wurde mit einem Mikroindenter nach dem Eindringverfahren durch Bestimmung der Rückfederkraft gemessen. Die Ergebnisse sind ebenfalls in Tabelle 2 angegeben. Diese Daten zeigen deutlich, daß die Schichthärte mit steigendem Gehalt des Zirkoniumkomplexes zunimmt.

**Tabelle 2.** Schichthärte eines Beschichtungssystems aus Vinyltriethoxysilan (250 mmol), Mercaptopropyltrimethoxysilan (250 mmol) und Zirkonium-dipropoxid-dimethacrylat in Abhängigkeit von der Menge des zugesetzten Metallchelatkomplexes.

| Nr. | Gehalt an Zirkonium-dipropoxid-dimethacrylat | | Schichthärte (N/mm²) |
|---|---|---|---|
| | absolut (mmol) | relativ (mol-%) | |
| 0 | 0 | 0 | 215 |
| 1 | 62,50 | 11 | 288 |
| 2 | 68,75 | 12 | 310 |
| 3 | 75,00 | 13 | 354 |

## Patentansprüche

1. Verwendung von Metallchelatkomplexen der folgenden Formel (I) als UV-Schutzmittel in Polymermaterialien;
XₘMLₙ (I)
worin
X für eine C₁- bis C₆-Alkoxygruppe, eine C₆- bis C₁₂-Aryloxygruppe oder für Halogenid steht und wobei, falls m größer als eins ist, die einzelnen X verschieden voneinander sein können;
m für eine ganze Zahl von 0 bis 3 steht;
M für ein Metallion steht;
L für einen Chelatliganden steht, der das Metallion M koordiniert, wobei, falls n größer als eins ist, die einzelnen L verschieden voneinander sein können;
n für eine ganze Zahl von 1 bis 3 steht;
und wobei
(a) mindestens eine Gruppe X als Ligand des Metallions M fungiert und hydrolysierbar ist oder mindestens ein Ligand L hydrolysierbar ist, so daß der Komplex zur koordinativen Einbindung in das Netzwerk des Polymermaterials durch Co-Kondensationsreaktionen befähigt ist, und wobei der Komplex auf diese Weise in das Netzwerk eingebunden wird,
und/oder
(b) mindestens ein Ligand L des Metallions M eine funktionelle Gruppe umfaßt, die die kovalente Verbindung des Komplexes mit dem Netzwerk des Polymermaterials durch Co-Polymerisation ermöglicht, und wobei der Komplex auf diese Weise mit dem Netzwerk verbunden wird.

2. Verwendung nach Anspruch 1, **dadurch gekennzeichnet, daß** M für ein Ion eines Metalls ausgewählt aus der Gruppe bestehend aus Be, Ca, Ba, Al, Ga, Ge, Sn, Pb, Bi, Ti, Zr, Co, Cu, Cd, Ce und La steht.

3. Verwendung nach einem der voranstehenden Ansprüche, **dadurch gekennzeichnet, daß** M für ein Ion eines Metalls ausgewählt aus Al, Zr und Ti steht.

4. Verwendung nach einem der voranstehenden Ansprüche, **dadurch gekennzeichnet, daß** L für einen Chelatliganden steht, der die konjugierte Base einer Verbindung einer der folgenden Formeln (II-a), (II-b) oder (II-c) ist; 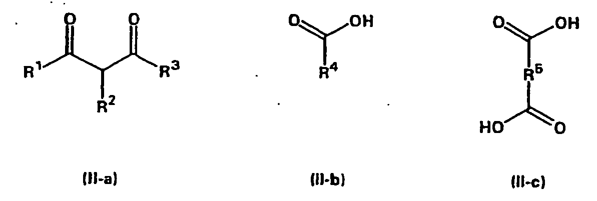 worin
R¹, R² und R³, unabhängig voneinander für H, CH₃, ^{t}Bu, CF₃, CF₂CF₂CF₃, OCH₃, OCH₂CH₃, Thien-2-yl, CH=CH₂, CH₂CH=CH₂, O[CH₂]ᵢOC(O)CH=CH₂ oder O[CH₂]ᵢCH=CH [CH₂]ₖCH₃ stehen, wobei i und k jeweils unabhängig voneinander für eine ganze Zahl von 1 bis 8 stehen;
R⁴ für eine C₁- bis C₆-Alkylgruppe, eine Vinyl- oder 1-Methylvinylgruppe steht;
R⁵ für eine kovalente Bindung, eine C₁- bis C₈-Alkylengruppe oder eine Phenylengruppe steht.

5. Verwendung nach einem der voranstehenden Ansprüche, **dadurch gekennzeichnet, daß** L für einen Chelatliganden steht, der die konjugierte Base von Acetylaceton, Ethylacetoacetat, Acrylsäure, Methacrylsäure oder 3-Hydroxy-2-methyl-4-pyron ist.

6. Verwendung nach einem der voranstehenden Ansprüche, **dadurch gekennzeichnet, daß** X für OMe, OEt, OⁿPr, OⁱPr, OⁿBu, O^{s}Bu, OⁱBu, O^{t}Bu, OPh, Cl oder Br steht.

7. Verwendung nach einem der voranstehenden Ansprüche, **dadurch gekennzeichnet, daß** kein zusätzlicher Radikalfänger verwendet wird.

8. Verwendung nach einem der voranstehenden Ansprüche, **dadurch gekennzeichnet, daß** das Polymermaterial ein anorganisch-organisches Hybridpolymer ist.

9. Verwendung nach einem der voranstehenden Ansprüche, **dadurch gekennzeichnet, daß** das Polymermaterial eine Beschichtung oder ein Lacksystem auf einem Trägermaterial bildet.

10. Verwendung nach einem der voranstehenden Ansprüche, **dadurch gekennzeichnet, daß** das Polymermaterial einen dreidimensionalen Formkörper bildet.

11. Polymermaterial enthaltend einen Metallchelatkomplex der folgenden Formel (I) als UV-Schutzmittel;
XₘMLₙ (I)
worin worin
X für eine C₁- bis C₆-Alkoxygruppe, eine C₆- bis C₁₂-Aryloxygruppe oder für Halogenid steht und wobei, falls m größer als eins ist, die einzelnen X verschieden voneinander sein können;
m für eine ganze Zahl von 0 bis 3 steht;
M für ein Metallion steht;
L für einen Chelatliganden steht, der das Metallion M koordiniert, wobei, falls n größer als eins ist, die einzelnen L verschieden voneinander sein können;
n für eine ganze Zahl von 1 bis 3 steht;
und wobei
(a) mindestens eine Gruppe X als Ligand des Metallions M fungiert und hydrolysierbar ist oder mindestens ein Ligand L hydrolysierbar ist, so daß der Komplex zur koordinativen Einbindung in das Netzwerk des Polymermaterials durch Co-Kondensationsreaktionen befähigt ist, und wobei der Komplex auf diese Weise in das Netzwerk eingebunden wird,
und/oder
(b) mindestens ein Ligand L des Metallions M eine funktionelle Gruppe umfaßt, die die kovalente Verbindung des Komplexes mit dem Netzwerk des Polymermaterials durch Co-Polymerisation ermöglicht, und wobei der Komplex auf diese Weise mit dem Netzwerk verbunden wird.

12. Verfahren zum Schutz eines UV-lichtempfindlichen Materials vor UV-lichtinduzierter Degradation durch Beschichten mit dem Polymermaterial nach Anspruch 11.

## Claims

1. Use of metal chelate complexes of the following formula (I) as UV protective agent in polymeric materials:
XₘMLₙ (I)
wherein
X stands for a C₁ to C₆ alkoxy group, a C₆ to C₁₂ aryloxy group or for halide and wherein, if m is greater than one, the individual Xs can be different from one another;
m stands for an integer between 0 and 3;
M stands for a metal ion;
L stands for a chelating ligand which coordinates the metal ion M, the individual Ls being able to be different from one another if n is greater than one;
n stands for an integer between 1 and 3;
and wherein
(a) at least one group X acts as the ligand of the metal ion M and is hydrolysable or at least one ligand L is hydrolysable such that the complex is rendered capable of coordinative binding into the network of the polymeric material by co-condensation reactions, and the complex being bound into the network in this way,
and/or
(b) at least one ligand L of the metal ion M includes a functional group which makes possible the covalent connection of the complex to the network of the polymeric material by co-polymerisation, and the complex being connected to the network in this way.

2. Use according to claim 1, **characterised in that** M stands for the ion of a metal selected from the group comprising Be, Ca, Ba, Al, Ga, Ge, Sn, Pb, Bi, Ti, Zr, Co, Cu, Cd, Ce and La.

3. Use according to one of the preceding claims, **characterised in that** M stands for an ion of a metal selected from Al, Zr and Ti.

4. Use according to one of the preceding claims, **characterised in that** L stands for a chelating ligand which is the conjugate base of a compound of one of the following formulae (II-a), (II-b) or (II-c); 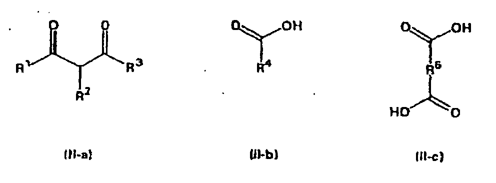 wherein
R¹, R² and R³, independently of one another, stand for H, CH₃, ^{t}Bu, CF₃, CF₂CF₂CF₃, OCH₃, OCH₂CH₃, thien-2-yl, CH=CH₂, CH₂CH=CH₂, O[CH₂]ᵢOC(O)CH=CH₂ or O[CH₂]ᵢCH=CH[CH₂]ₖCH₃, i and k, independently of one another, each standing for an integer between 1 and 8;
R⁴ stands for a C₁ to C₆ alkyl group, a vinyl, or 1-methyl vinyl group;
R⁵ stands for a covalent bond, a C₁ to C₈ alkylene group or a phenylene group.

5. Use according to one of the preceding claims, **characterised in that** L stands for a chelating ligand which is the conjugate base of acetylacetone, ethyl acetylacetone, acrylic acid, methacrylic acid or 3-hydroxy-2-methyl-4-pyrone.

6. Use according to one of the preceding claims, **characterised in that** X stands for OMe, OEt, OⁿPr, OⁱPr, OⁿBu, O^{δ}Bu, OⁱBu, O^{t}Bu, OPh, Cl or Br.

7. Use according to one of the preceding claims, **characterised in that** no additional radical interceptor is used.

8. Use according to one of the preceding claims, **characterised in that** the polymeric material is an inorganic-organic hybrid polymer.

9. Use according to one of the preceding claims, **characterised in that** the polymeric material forms a coating or a paint system on a substrate.

10. Use according to one of the preceding claims, **characterised in that** the polymeric material forms a three-dimensional moulded article.

11. Polymeric material containing a metal chelate complex of the following formula (I) as UV protective agent:
XₘMLₙ (I)
wherein
X stands for a C₁ to C₆ alkoxy group, a C₆ to C₁₂ aryloxy group or for halide and wherein, if m is greater than one, the individual Xs can be different from one another;
m stands for an integer between 0 and 3;
M stands for a metal ion;
L stands for a chelating ligand which coordinates the metal ion M, the individual Ls being able to be different from one another if n is greater than one;
n stands for an integer between 1 and 3;
and wherein
(a) at least one group X acts as the ligand of the metal ion M and is hydrolysable or at least one ligand L is hydrolysable so that the complex is rendered capable of coordinative binding into the network of the polymeric material by co-condensation reactions, and the complex being bound into the network in this way,
and/or
(b) at least one ligand L of the metal ion M includes a functional group which makes possible the covalent connection of the complex to the network of the polymeric material by co-polymerisation, and the complex being connected to the network in this way.

12. Method for protecting a UV-light-sensitive material against UV-light-induced degradation by coating with the polymeric material according to claim 11.

## Revendications

1. Utilisation de complexes chélatés métalliques répondant à la formule (I) suivante, comme agents de protection contre les rayons UV dans les matériaux polymères,
Xm MLn (I)
formule dans laquelle
X représente un groupe alcoxy en C₁ à C₆, un groupe aryle en C₆ à C₁₂ oxy ou un halogénure et les différents X pouvant, si m est supérieur à 1, être différents les uns des autres,
m représente un nombre entier de 0 à 3 ;
M représente un ion métallique ;
L représente un ligand de chélate qui coordonne l'ion métallique M, si n est supérieur à 1, les différents L pouvant être différents les uns des autres,
n représente un nombre entier de 1 à 3 ;
et
(a) au moins un groupe X joue le rôle de ligand de l'ion métallique M et est hydrolysable ou au moins un ligand L est hydrolysable, de telle sorte que le complexe soit apte à une liaison coordinative dans le réseau du matériau polymère par des réactions de co-condensation, et le complexe étant lié de cette façon dans le réseau,
et/ ou
(b) au moins un ligand L de l'ion métallique M comprend un groupe fonctionnel qui permet la liaison covalente du complexe avec le réseau du matériau polymère par copolymérisation, le complexe se trouvant lié ainsi avec le réseau.

2. Utilisation selon la revendication 1,
**caractérisée en ce que**
M représente un ion d'un métal choisi dans le groupe constitué de Be, Ca, Ba, Al, Ga, Ge, Sn, Pb, Bi ; Ti, Zr, Co, Cu, Cd, Ce et La.

3. Utilisation selon l'une des revendications précédentes,
**caractérisée en ce que**
M représente un ion d'un métal choisi parmi Al, Zr et Ti.

4. Utilisation selon l'une des revendications précédentes,
**caractérisée en ce que**
L représente un ligand de chélate qui constitue la base conjuguée d'un composé d'une des formules (II-a), (II-b) ou (II-c) ci-après ; 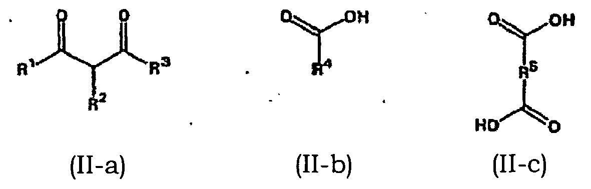 dans lesquelles
R¹, R² et R³ représentent, indépendamment les uns des autres, H, CH₃, ^{t}Bu, CF₃, CF₂ CF₂ CF₃, OCH₃, OCH₂ CH₃, thien-2-yle, CH = CH₂, CH₂ CH = CH₂, O(CH₂)ᵢOC(O)CH = CH₂ ou O(CH₂)ᵢCH = CH(CH2)ₖCH₃, avec i et k représentant à chaque fois, indépendamment l'un de l'autre, un nombre entier de 1 à 8 ;
R⁴ représente un groupe alkyle en C₁ à C₆, un groupe vinyle ou 1-méthylvinyle ;
R⁵ représente une liaison covalente, un groupe alkylène en C₁ à C₈ ou un groupe phénylène.

5. Utilisation selon l'une des revendications précédentes,
**caractérisée en ce que**
L représente un ligand de chélate qui constitue la base conjuguée d'acétylacétone, acétoacétate d'éthyle, acide acrylique, acide méthacrylique ou 3-hydroxy-2-méthyl-4-pyrone.

6. Utilisation selon l'une des revendications précédentes,
**caractérisée en ce que**
X représente OMe, OEt, Oⁿ Pr, Oⁱ Pr, Oⁿ Bu, O^{s} Bu, Oⁱ Bu, O^{t} Bu, OPh, Cl ou Br.

7. Utilisation selon l'une des revendications précédentes,
**caractérisée en ce qu'**
on n'utilise pas d'anti-radicalaire supplémentaire.

8. Utilisation selon l'une des revendications précédentes,
**caractérisée en ce que**
le matériau polymère est un polymère hybride inorganique - organique.

9. Utilisation selon l'une des revendications précédentes,
**caractérisée en ce que**
le matériau polymère forme un revêtement ou un système de peinture sur un matériau support.

10. Utilisation selon l'une des revendications précédentes,
**caractérisée en ce que**
le matériau polymère forme un corps moulé tridimensionnel.

11. Matériau polymère contenant un complexe de chélate métallique répondant à la formule (I) suivante comme agent de protection contre les rayons UV :
Xₘ MLₙ (I)
formule dans laquelle
X représente un groupe alcoxy en C₁ à C₆, un groupe aryle en C₁ à C₁₂ oxy ou un halogénure, et si m est supérieur à 1, les différents X pouvant être différents les uns des autres,
m représente un nombre entier de 0 à 3 ;
M représente un ion métallique ;
L représente un ligand de chélate qui coordonne l'ion métallique M, les différents L pouvant, si n est supérieur à 1, être différents les uns des autres ;
n représente un nombre entier de 1 à 3 ;
et
(a) au moins un groupe X joue le rôle de ligand de l'ion métallique M et est hydrolysable ou au moins un ligand L est hydrolysable, de telle sorte que le complexe soit apte à une liaison coordinative dans le réseau du matériau polymère par des réactions de co-condensation, et le complexe étant lié de cette façon dans le réseau,
et/ ou
(b) au moins un ligand L de l'ion métallique M comprenant un groupe fonctionnel qui permet la liaison covalente du complexe avec le réseau du matériau polymère et le complexe se trouvant lié de cette façon avec le réseau.

12. Procédé pour la protection d'un matériau sensible aux rayons UV, contre une dégradation induite par la lumière UV, par revêtement avec le matériau polymère selon la revendication 11.
